# FASCICULE DE BREVET EUROPEEN

(11) **EP 2 633 183 B1**
(45) Date de publication et mention de la délivrance du brevet: **30.08.2017**
(21) Numéro de dépôt: 11787924.7
(22) Date de dépôt: 26.10.2011
(51) Int. Cl.: F03B 13/12, B63H 19/02, F03B 13/14, F03B 13/22, F03G 7/00

(54) **DISPOSITIF DE RECUPERATION D'ENERGIE**
VORRICHTUNG ZUR ENERGIERÜCKGEWINNUNG
ENERGY RECUPERATION DEVICE

(30) Priorité: 27.10.2010 FR 1058821
(43) Date de publication de la demande: 04.09.2013
(73) Titulaire: Geps Techno, 44600 Saint-Nazaire (FR)
(72) Inventeur: BARSACQ, Mathieu, F-44000 Nantes (FR)
(74) Mandataire: Novagraaf Technologies
(86) Numéro de dépôt international: PCT/FR2011/052494
(87) Numéro de publication internationale: WO 2012/056167

(56) Documents cités:
- EP-A1- 0 050 183
- WO-A1-98/32967
- WO-A1-2006/102694
- FR-A1- 2 500 887
- GB-A- 1 492 427
- GB-A- 2 311 565
- JP-A- 57 138 495
- US-A- 4 179 886
- US-A1- 2009 015 103

## Description

La présente invention concerne, de façon générale, la récupération de l'énergie de mouvements présents sur notre planète, tels que les mouvements de la mer, les secousses sismiques ou les mouvements d'objets mobiles.

On connaît déjà, par les brevets Français FR 2 500 887 et FR 2 375 463, des dispositifs permettant de récupérer l'énergie de la houle sous forme d'énergie électrique. Le dispositif selon le brevet FR2 500 887 décrit un dispositif comme dans le préambule de la revendication 1. Le dispositif selon le brevet FR 2 375 463 comprend principalement un récipient flottant à la surface de la mer comprenant deux compartiments périphériques disposés symétriquement par rapport à l'axe central du récipient. Les deux compartiments sont distants l'un de l'autre et communiquent l'un avec l'autre au niveau de leur partie inférieure par au moins un canal inférieur. Ces deux compartiments sont remplis partiellement d'un fluide apte à circuler entre les deux compartiments via le canal inférieur. Une turbine couplée à un alternateur est disposée dans le canal inférieur pour produire de l'électricité. Sous l'effet des mouvements de la mer, notamment de la houle, le récipient oscille et provoque un déplacement du fluide d'un compartiment à l'autre. Le déplacement de fluide entraîne alors la turbine qui produit alors de l'électricité via l'alternateur.

Ce dispositif est très simple à réaliser mais présente toutefois de nombreux inconvénients, parmi lesquels:
- le fluide se déplace d'un compartiment A vers un compartiment B puis du compartiment B vers le compartiment A; pour obtenir un rendement correct, il est nécessaire de prévoir deux turbines, à savoir une pour chaque sens d'écoulement, ces deux turbines pouvant être disposées dans le même canal inférieur;
- la puissance transmise par le fluide à la turbine ou à chacune des turbines est très variable puisqu'elle passe de zéro à quelques centaines, voire quelques milliers, de kilowatts (kW) en quelques secondes puis repasse à zéro, et cela à chaque oscillation du récipient flottant correspondant à une demi-période de houle qui dure généralement de 5 à 10 secondes;
- ce dispositif nécessite de maintenir l'axe longitudinal du récipient (axe perpendiculaire à l'axe central et appartenant au plan de symétrie des deux compartiments) dans une direction parallèle à la direction de propagation de la houle, ce qui réduit considérablement le nombre de sites où ces conditions sont réalisables avec un seul point fixe de mouillage; dans un site quelconque, l'installation du dispositif nécessite la mise en place de deux points fixes de mouillage, ce qui amène à privilégier une direction de propagation de houle prédominante et réduit le rendement du dispositif dès que la direction de propagation de la houle s'écarte de cette direction prédominante.

Un but de la présente invention est de proposer un dispositif palliant toute ou partie des inconvénients précités.

A cet effet, la présente invention concerne un dispositif de récupération de l'énergie de mouvements, tels que les mouvements de la mer, des secousses sismiques ou les mouvements d'objets mobiles, sous la forme d'énergie électrique, comprenant:
- un récipient présentant un axe principal et apte à osciller autour d'au moins un axe perpendiculaire audit axe principal sous l'effet desdits mouvements, ledit récipient comprenant:
   - plus de trois compartiments différents, ledit récipient contenant un fluide apte à circuler, lorsque ledit récipient oscille, entre lesdits compartiments différents,
   - au moins une turbine disposée sur le trajet du fluide circulant entre lesdits compartiments différents et couplée à un alternateur pour produire de l'énergie électrique lorsque le fluide circulant entre les compartiments différents entraine ladite turbine,
   - un compartiment central à travers lequel transite le fluide circulant entre lesdits compartiments différents, ledit compartiment central comprenant une portion supérieure, une portion inférieure et une portion intermédiaire, et la turbine étant disposée dans le compartiment intermédiaire et étant apte à être entraînée en rotation par le fluide circulant entre la portion supérieure et la portion inférieure du compartiment central,
   - des systèmes de vannes disposés entre les compartiments pour transférer du fluide de l'un au moins des compartiments différents vers la portion supérieure du compartiment central et de la portion inférieure du compartiment central vers un autre des compartiments différents lorsque l'énergie potentielle du fluide dans le premier compartiment cité est supérieure à l'énergie potentielle du fluide dans ledit autre compartiment, caractérisé en ce que
les plus de trois compartiments différents sont disposés périphériquement tout autour du compartiment central, décalés angulairement les uns des autres par rapport à l'axe principal, lesdits systèmes de vannes étant prévus entre chacun desdits compartiments périphériques et le compartiment central, et en ce que la portion intermédiaire du compartiment central présente un canal de section réduite entre la portion supérieure et la portion inférieure dudit compartiment central. Ainsi, selon l'invention, le fluide circulant entre les premier et deuxième compartiments transite par un compartiment central dans lequel est montée la turbine. Dans ce compartiment central, le fluide circule toujours du haut vers le bas, plus particulièrement de la portion supérieure vers la portion inférieure, quels que soient les mouvements du récipient. La turbine est donc toujours entraînée dans le même sens quel que soit le sens de circulation du fluide. Ceci améliore le rendement de la turbine en évitant les phases d'accélération et de décélération. De plus, il n'est donc pas nécessaire de prévoir une deuxième turbine.

La portion supérieure du compartiment central, appelée également cuve centrale, forme une cuve tampon pouvant contenir une réserve de fluide, cette réserve de fluide garantissant un entraînement en rotation plus régulier de la turbine.

Le volume de cette portion supérieure est au moins égale à un cinquième du volume du premier compartiment ou du deuxième compartiments, de préférence au moins égale à un tiers, de préférence au moins égale à la moitié, du volume du premier ou deuxième compartiment, mieux encore au moins égale au volume du premier ou deuxième compartiment.

Le dispositif peut comprendre une pluralité de turbines, par exemple deux turbines, disposées sur le trajet du fluide circulant entre lesdits premier et deuxième compartiments.

Selon une particularité, le premier système de vannes et le deuxième système de vannes sont chacun aptes à injecter le fluide dans la portion supérieure du compartiment central de manière à engendrer un mouvement de rotation du fluide, appelé tourbillon ou vortex, dans ladite portion supérieure, ledit compartiment central étant de préférence équipé d'au moins une turbine à axe de rotation vertical, de préférence sensiblement confondu avec l'axe principal du récipient.

Dans ce mode de réalisation, le dispositif récupère l'énergie potentielle du fluide, résultant d'une différence de hauteur d'eau entre les premier et deuxième compartiments, tel que décrit précédemment, ainsi que l'énergie cinétique de la masse de fluide qui est en rotation dans le compartiment central. La mise en mouvement de rotation de la masse de fluide contenue dans la portion supérieure du compartiment ou réservoir central résulte
- de l'injection d'eau des compartiments périphériques par différence de hauteur d'eau,
- du mouvement rotatif du fluide dans le compartiment central généré par les mouvements du récipient, et
- de l'évacuation de l'eau par l'orifice de la turbine par différence de pression entre le compartiment central et les compartiments périphériques.

Des résultats d'essais montrent que l'énergie transmise par le débit qui passe à travers la turbine correspond à environ 1/5 de l'énergie totale récupérée par le dispositif, la plus grande partie de l'énergie transmise, environ les 4/5, est constitué par l'énergie cinétique du fluide en rotation. Ainsi, une grande partie de l'énergie cinétique du fluide en rotation provient directement des mouvements du récipient. Le vortex agit comme une sorte de "volant d'inertie hydraulique", dont le mouvement et la vitesse sont entretenus par le mouvement de la structure. Le mouvement en rotation du fluide à l'intérieur du compartiment central est une énorme réserve d'énergie qui permet d"'aplatir" les variations de débit liées à la variabilité du delta de hauteur d'eau. De ce fait, la turbine subit moins les variations de débit.

La forme de la portion supérieure du compartiment central est définie de manière à favoriser et entretenir la formation du tourbillon ou vortex. Elle peut être de section polygonale, de révolution ou hélicoïdale. Dans le cas d'une section polygonale, la portion supérieure comprend de préférence au moins cinq côtés.

Selon un mode de réalisation, chacun des premier et second systèmes de vannes comprend au moins un système d'injection apte à injecter le fluide depuis la paroi latérale dans une direction d'injection faisant un angle d'au moins 45° par rapport à la normale à ladite paroi latérale, de préférence d'au moins 65°, et faisant de préférence un angle de moins de 45° par rapport à l'horizontale lorsque le récipient est en position initiale.

Selon un mode de réalisation, ledit système d'injection comprend une vanne dite d'injection comportant au moins un clapet monté pivotant autour d'un axe vertical entre une position de fermeture d'un orifice et une position ouverte dans laquelle ledit clapet s'étend dans la portion supérieure et forme un déflecteur pour orienter le flux de fluide dans ladite direction d'injection, des moyens d'actionnement agissant de préférence sur ledit clapet pour sa manoeuvre entre ses deux positions. Selon un mode de réalisation, la vanne d'injection comprend au moins deux clapets se chevauchant en position fermée, les moyens d'actionnement comprenant un actionneur agissant sur un des clapets.

Pour l'obtention du vortex, dans le cas de compartiment central de section polygonale, la paroi latérale du compartiment central peut être équipée de déflecteurs de sorte que l'angle d'incidence du flux de fluide avec la paroi latérale du compartiment central soit d'au moins 45°.

Selon la réalisation revendiquée le dispositif comprend plus de trois compartiments périphériques disposés autour du compartiment central, décalé angulairement les uns des autres par rapport à l'axe principal, des systèmes de vannes étant prévus entre chaque compartiment périphérique et le compartiment central pour la circulation du fluide entre des compartiments périphériques disposés de part et d'autre de l'axe principal, de sorte que le dispositif soit apte à produire de l'énergie électrique quels que soient les mouvements d'oscillation du récipient.

Selon un mode de réalisation préféré, les premier et deuxième compartiments sont identiques et sont disposés symétriquement par rapport à l'axe principal pour que le récipient puisse se déplacer en rotation autour d'au moins un axe perpendiculaire à l'axe principal.

Le compartiment central présente avantageusement au moins deux plans de symétrie contenant chacun l'axe principal et le récipient comprend n couples de premier et deuxième compartiments, les premier et deuxième compartiments, de préférence identiques, de chaque couple étant disposés de part et d'autre de l'axe principal, en particulier symétriquement par rapport audit axe principal, et les couples de premier et deuxième compartiments sont disposés autour dudit compartiment central, n étant un nombre pair supérieur ou égal à 2, pour que le dispositif soit pluridirectionnel et puisse fonctionner quelle que soit la direction de propagation de la houle avec un unique ou plusieurs points fixe de mouillage selon la configuration de l'installation.

Selon un mode de réalisation particulier, le compartiment central est un prisme droit dont la base est un polygone à 2n côtés et les premier et deuxième compartiments sont des prismes à base trapézoïdale, chacune des faces du prisme du compartiment central étant adjacente à une face du prisme d'un desdits premier et deuxième compartiments. Le nombre n est par exemple égal à 8.

D'une manière générale, le dispositif comprend un nombre pair ou impair de compartiments périphériques disposés autour du compartiment central, par exemple trois compartiments disposés en étoile autour du compartiment central, des systèmes de vannes étant prévus entre chaque compartiment périphérique et le compartiment central pour la circulation du fluide.

Selon un mode de réalisation, le récipient comprend au moins n couples de premier et deuxième compartiments, les premier et deuxième compartiments, de préférence identiques, de chaque couple étant disposés de part et d'autre dudit axe principal, en particulier symétriquement par rapport audit axe principal, et les couples de premier et deuxième compartiments sont disposés les uns au dessus des autres, n étant un nombre pair supérieur ou égal à 2, le dispositif comprenant un premier couple positionné dans la direction verticale en dessous d'au moins un deuxième couple. Selon une particularité, le compartiment central présente une paroi supérieure disposée, dans la direction verticale en dessous des compartiments périphériques du deuxième couple.

Selon un mode de réalisation, chacun des premier et second compartiments est connecté à une première voie d'une vanne de type 3-voies, la deuxième voie et la troisième voie de ladite vanne de type 3-voies sont connectées respectivement à un premier conduit et à un deuxième conduit, ledit premier conduit étant connecté à la portion supérieure du compartiment central, et le deuxième conduit étant connecté à la portion inférieure par une vanne dite inférieure, les deuxième et troisième voies des vannes de type 3-voies de premiers compartiments superposés et/ou de deuxièmes compartiments superposés étant de préférence connectées respectivement à un même premier conduit et à un même second conduit.

Ledit premier conduit connecté à la portion supérieure du compartiment central est de préférence équipé d'un système d'injection, formé par exemple d'un déflecteur, apte à injecter le fluide dans la portion supérieure du compartiment central de manière à engendrer un vortex dans ladite portion supérieure.

Dans ce mode de réalisation, pour chaque couple de premier et deuxième compartiments,
- le premier système de vanne comprend d'une part la vanne de type 3-voies, le premier conduit et l'éventuel système d'injection du premier compartiment, et d'autre part la vanne inférieure, le deuxième conduit et la vanne de type 3-voies du deuxième compartiment;
- le deuxième système de vanne comprend d'une part, la vanne de type 3-voies, le premier conduit et l'éventuel système d'injection du deuxième compartiment, et d'autre part la vanne inférieure, le deuxième conduit et la vanne de type 3-voies du premier compartiment.

Selon un mode de réalisation particulier, le compartiment central comporte, dans sa portion intermédiaire, un canal de section inférieure à la section de la portion supérieure à travers lequel circule le fluide et dans lequel est montée la turbine. Dans ce mode de réalisation, le compartiment central comporte avantageusement, dans sa portion intermédiaire, un convergent disposé en amont dudit canal pour diriger le fluide provenant de la portion supérieure vers l'entrée du canal.

De préférence, le compartiment central comporte également, dans sa portion intermédiaire, un divergent disposé en aval dudit canal, à la sortie de celui-ci, pour augmenter le rendement de la turbine selon le principe de conservation des masses.

Avantageusement, les vannes sont pilotées par une boucle de régulation en ouverture/fermeture et/ou en débit pour maintenir une circulation permanente de fluide entre ladite portion supérieure et ladite portion inférieure.

L'invention concerne également une embarcation, telle qu'une barge ou un bateau, apte à flotter sur une masse liquide, notamment sur la mer, animée de mouvements, en particulier la houle marine, caractérisée en ce qu'elle est équipée d'un dispositif de récupération d'énergie tel que défini précédemment pour générer de l'énergie électrique à partir de l'énergie desdits mouvements.

L'invention concerne également un dispositif terrestre animé de mouvements réguliers ou irréguliers caractérisé en ce qu'il est équipé d'un dispositif de récupération d'énergie tel que défini précédemment pour récupérer l'énergie desdits mouvements du dispositif terrestre sous la forme d'énergie électrique. Ce dispositif terrestre est par exemple un véhicule mobile, tel qu'un train ou une automobile.

L'invention concerne également un dispositif aéronautique, spatial, ou sous-marin animé de mouvements réguliers ou irréguliers caractérisé en ce qu'il est équipé d'un dispositif de récupération d'énergie tel que défini précédemment pour récupérer l'énergie desdits mouvements du dispositif sous la forme d'énergie électrique. Ce dispositif est par exemple un véhicule mobile, tel qu'un avion ou une station spatiale.

Dans le cadre de la récupération de l'énergie de secousses sismiques, le dispositif terrestre est par exemple une plate-forme disposée à la surface de l'écorce terrestre.

Avantageusement, le dispositif terrestre est équipé de moyens de rappel élastique disposés entre le dispositif de récupération d'énergie et ledit dispositif terrestre pour entretenir, si nécessaire, les mouvements du dispositif de récupération d'énergie.

L'invention sera mieux comprise, et d'autres buts, détails, caractéristiques et avantages apparaîtront plus clairement au cours de la description explicative détaillée qui va suivre, en se référant ci-dessous aux dessins annexés, lesquels :
- la figure 1 est une vue schématique de dessus d'un dispositif selon un premier mode de réalisation de l'invention;
- la figure 2, est une vue schématique en coupe selon un plan médian du dispositif de la figure 1;
- la figure 3 est une vue en coupe selon un plan médian d'un dispositif selon une variante du premier mode de réalisation ;
- les figures 4A à 4H sont des vues illustrant le fonctionnement du dispositif des figures 1 et 2 ;
- les figures 5 et 6 sont respectivement une vue de dessus et une vue schématique selon un plan médian vertical d'un dispositif selon un deuxième mode de réalisation ;
- les figures 7A et 7B sont des vues schématiques de vannes d'injection du dispositif des figures 5 et 6, respectivement en position fermée et en position ouverte ;
- les figures 8A à 8D sont des vues schématiques illustrant le fonctionnement du dispositif des figures 5 et 6 ;
- les figures 9 et 10 sont respectivement une vue de dessus et une vue schématique selon un plan médian vertical d'un dispositif selon un troisième mode de réalisation ; et,
- les figures 11A à 11F sont des vues schématiques illustrant le fonctionnement du dispositif des figures 9 et 10.

L'invention sera décrite dans le cadre d'un dispositif de récupération de l'énergie de la houle sans qu'on puisse y voir une quelconque limitation de la portée de l'invention à ce type d'énergie. Le dispositif est applicable pour la récupération de l'énergie issue de tout corps en mouvement. Il est aussi applicable pour la récupération de l'énergie vibratoire issue de secousses sismiques.

Le principe général du dispositif de l'invention consiste à transformer l'énergie cinétique d'un solide en mouvement de rotation ou d'oscillation non uniforme autour d'un ou plusieurs axes en énergie potentielle d'un fluide en transformant le mouvement du solide en une hauteur de fluide. Cette énergie potentielle du fluide est ensuite transformée, par un écoulement quasi-continu sur une turbine couplée à un alternateur, en une énergie électrique. Cette énergie électrique est ensuite transmise au réseau électrique ou stockée sous une forme exploitable ultérieurement.

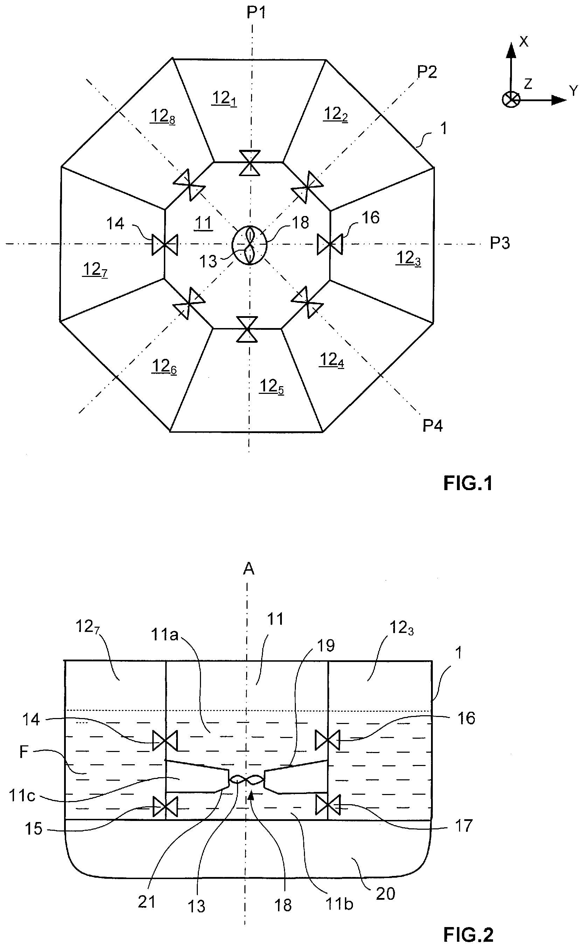

Un premier mode de réalisation de l'invention est représenté schématiquement aux figures 1 et 2.

En référence à ces figures, le dispositif comprend un récipient 1 comportant un compartiment central 11 comprenant un axe principal A et huit compartiments périphériques 12₁ à 12₈ disposés tout autour du compartiment central. Les compartiments périphériques sont disposés par couple autour du compartiment central, les deux compartiments de chaque couple étant disposés symétriquement par rapport à l'axe principal A. Le récipient comporte également, en partie inférieure, un caisson 20 rempli d'air et étanche à l'eau servant de flotteur pour maintenir le récipient à la surface de la mer.

Le compartiment central 11 est un prisme droit à base octogonale et les compartiments périphériques 12₁ à 12₈ sont des prismes droits à base trapézoïdale. Chacune des faces du compartiment central est adjacente à une face des compartiments périphériques, et plus précisément la face correspondant à la "petite base" du trapèze. Les compartiments périphériques forment une couronne autour du compartiment central. Le compartiment central présente ainsi 4 plans de symétrie référencés P1, P2, P3 et P4 décalés successivement d'un angle de 45° et contenant chacun l'axe A.

Le compartiment central et les compartiments périphériques contiennent du fluide F. Ce fluide est apte à circuler entre les compartiments périphériques en passant par le compartiment central lorsque le récipient oscille ou pivote autour d'au moins un axe perpendiculaire à l'axe A. Le fluide est choisi en fonction de paramètres, tels que viscosité et/ou stérilité, adaptés au récipient employé.

Une turbine 13 est disposée dans le compartiment central. Cette turbine est disposée sur le trajet du fluide circulant entre les compartiments périphériques. Cette turbine est couplée à un alternateur (non représenté sur les figures 1 et 2) disposé dans le compartiment central ou à l'extérieur de celui-ci pour produire de l'énergie électrique lorsque la turbine est entrainée par le fluide circulant dans le compartiment central.

Des systèmes de vannes anti-retour sont prévus au niveau de la paroi entre les compartiments périphériques et le compartiment central. Pour chaque couple de compartiments périphériques disposés symétriquement par rapport à l'axe A, on prévoit quatre vannes ou clapets anti-retour. Ces vannes anti-retour sont référencées 14, 15, 16 et 17 pour le couple des compartiments périphériques 12₇ et 12₃. Les vannes 14 et 16 sont disposées au niveau de la portion supérieure, référencée 11a, du compartiment central 11 et les vannes 15 et 17 sont disposées au niveau de la portion inférieure, référencée 11b, du compartiment central.

Les vannes anti-retour 14 et 17 sont prévues pour respectivement laisser passer du fluide du compartiment 12₇ vers le compartiment central 11 et du compartiment central 11 vers le compartiment 12₃. A l'inverse, les vannes anti-retour 16 et 15 sont prévues pour respectivement laisser passer du fluide du compartiment 12₃ vers le compartiment central 11 et du compartiment central 11 vers le compartiment 12₇.

La turbine 13 est disposée dans une portion intermédiaire 11c entre les portions supérieure et inférieure 11a et 11b de sorte que, lorsque du fluide circule de la portion supérieure vers la portion inférieure sous l'effet de la gravité, ledit fluide entraine en rotation ladite turbine.

Dans l'exemple des figures 1 et 2, la portion intermédiaire 11c présente un canal 18 de section réduite par rapport à la section des portions 11a et 11b dans lequel est disposée la turbine 13. L'axe de rotation de la turbine est placé sur l'axe A.

Le compartiment central est avantageusement équipé, dans sa portion intermédiaire 11c, d'un convergent 19 disposé en amont du canal 18 pour diriger le fluide provenant de la portion supérieure 11a vers le canal 18. Il comprend également avantageusement un divergent 21, disposé en aval du canal 18, pour le rendement de la turbine selon le principe de conservation des masses.

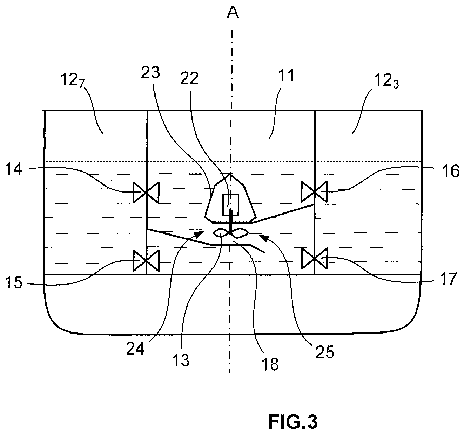

Il est à noter que la structure de dispositif proposé aux figures 1 et 2 peut être modifiée si l'alternateur doit être monté en couplage direct juste au-dessus de la turbine, par exemple dans le cas d'une turbine de type Kaplan. Une telle structure est proposée à la figure 3. Les éléments qui sont communs avec le mode de réalisation des figures 1 et 2 sont référencés dans la figure 3 par les mêmes numéros. Dans cette figure, le compartiment central présente une portion intermédiaire modifiée par rapport aux figures 1 et 2. Dans cette portion, le canal 18 est un canal hélicoïdal. Il présente à proximité de l'axe A une portion plane sensiblement horizontale. La turbine 13 est placée dans le canal au niveau de cette portion. L'alternateur 22 couplé à la turbine est disposé, à l'extérieur du canal, sur la paroi formant cette portion de canal. L'axe vertical reliant la turbine 13 à l'alternateur 22 traverse ladite paroi. L'alternateur 22 est placé dans une enceinte étanche 23. Cette enceinte présente dans sa partie inférieure une paroi oblique pour former avec la paroi du canal hélicoïdal un convergent 24 en amont de la turbine 13. De même, un divergent 25 est prévu à la sortie du canal, en aval de la turbine.

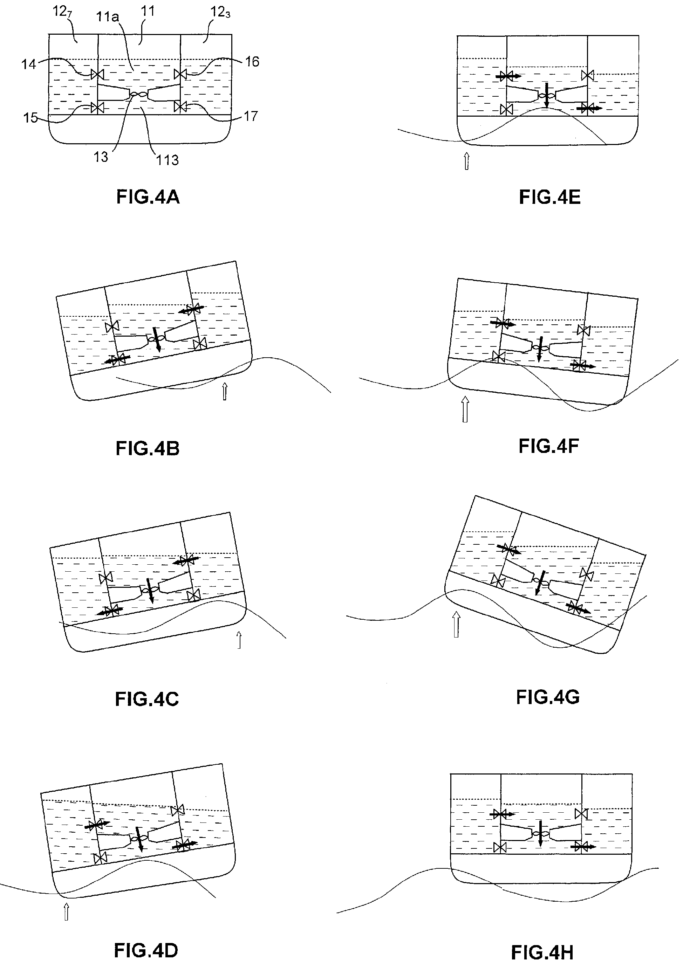

Le fonctionnement du dispositif des figures 1 et 2, lorsqu'il est soumis aux actions de la houle, est décrit en référence aux figures 4A à 4H. Dans ces figures, le récipient 1 oscille autour d'un axe parallèle à la direction de propagation de la houle.

La figure 4A représente la position initiale du récipient lorsqu'il est horizontal et que les niveaux de fluide dans les différents compartiments sont équilibrés.

Ensuite, dans une première phase illustrée par la figure 4B, la houle génère un mouvement vertical à tribord du récipient, qui crée une différence de hauteur de fluide entre les différents compartiments. Pendant cette phase, le compartiment 12₃ déverse du fluide dans la portion supérieure 11a du compartiment 11 à travers la vanne 16. Du fluide circule entre la portion supérieure 11a et la portion inférieure 11b du compartiment central, entraînant en rotation la turbine 13. Enfin, la portion inférieure 11b déverse du fluide dans le compartiment 12₇ à travers la vanne 15.

Dans la phase suivante illustrée par la figure 4C, le récipient atteint son angle de gîte maximal. Il existe toujours une légère différence de niveau entre les différents compartiments. L'écoulement se poursuit donc dans le même sens mais à une vitesse plus faible. Le mouvement de rotation du récipient est sur le point de s'inverser.

Dans la phase suivante illustrée par la figure 4D, le mouvement de rotation du récipient s'est inversé et l'angle de gîte se réduit. Le compartiment 12₇ déverse dans la partie supérieure du compartiment 11 à travers la vanne 14. Du fluide circule entre la portion supérieure 11a et la portion inférieure 11c du compartiment central, entraînant en rotation la turbine 13. Le sens de rotation de la turbine est inchangé. Enfin, la portion inférieure 11c déverse du fluide dans le compartiment 12₃ à travers la vanne 17. La production d'énergie électrique est ininterrompue.

Dans la phase suivante illustrée par la figure 4E, le récipient passe par une position horizontale instantanée mais la différence de niveaux entre les différents compartiments permet la continuité de l'écoulement entre la portion supérieure et la portion inférieure du compartiment central. La production d'énergie électrique continue.

Dans la phase suivante illustrée par la figure 4F, l'angle de gîte s'est de nouveau inversé. La différence de niveau entre les différents compartiments restant non nulle, l'alimentation en fluide de la turbine continue.

Dans la phase suivante illustrée par la figure 4G, l'angle de gîte s'accentue et atteint son maximum. La différence de niveaux entre les différents compartiments étant élevée, la turbine développe une puissance importante. Le mouvement de rotation du récipient est sur le point de s'inverser.

Dans la phase suivante illustrée par la figure 4H, le mouvement de rotation s'est inversé. L'angle de gîte est voisin de 0 degré mais la différence de niveau entre les différents compartiments étant non nulle, l'alimentation en fluide de la turbine se poursuit. On repasse ensuite à la phase illustrée par la figure 4B.

Selon un mode de réalisation préféré, les vannes anti-retour 14 à 17 sont pilotées en ouverture/fermeture et/ou en débit par une boucle de régulation pour maintenir une circulation permanente de fluide entre la portion supérieure 11a et la portion inférieure 11b. Cela permet à la turbine de fonctionner de manière continue dans une fourchette de vitesse et de pression pour laquelle elle a été conçue. Cette boucle de régulation peut également agir sur le pas de la turbine pour s'adapter au débit de fluide transféré entre compartiments.

La boucle de régulation agit sur le niveau d'ouverture des diaphragmes des vannes anti-retour et éventuellement sur le pas de la turbine en fonction d'une pluralité de paramètres d'entrée parmi les paramètres suivants:
- l'angle du récipient selon l'axe Ox (gîte) et/ou l'axe Oy (assiette) et/ou l'axe Oz (lacet);
- la période de la houle et/ou la période de roulis et/ou la période de tangage;
- l'accélération selon les axes Ox, Oy et Oz;
- la puissance captée par la turbine;
- des paramètres de stabilité du récipient;
- la puissance électrique instantanée en sortie d'alternateur;
- la puissance disponible.

Ainsi, selon l'invention, le fluide circulant entre les compartiments périphériques transite par un compartiment central qui permet de transformer l'énergie des mouvements aléatoires, irréguliers et éventuellement discontinus du récipient en une énergie plus régulière et plus progressive qui est captée par la turbine.

La turbine transforme l'énergie potentielle du fluide contenu dans les compartiments périphériques en énergie mécanique, cette énergie mécanique étant transformée par l'alternateur en énergie électrique.

Dans l'application précédemment décrite, à savoir la production d'énergie à partir de mouvements de la houle, le récipient qui est disposé dans une embarcation, telle qu'un bateau ou une barge, est soumis à des excitations ou forces mécaniques se reproduisant de manière séquentielle et régulière (période quasi-constante).

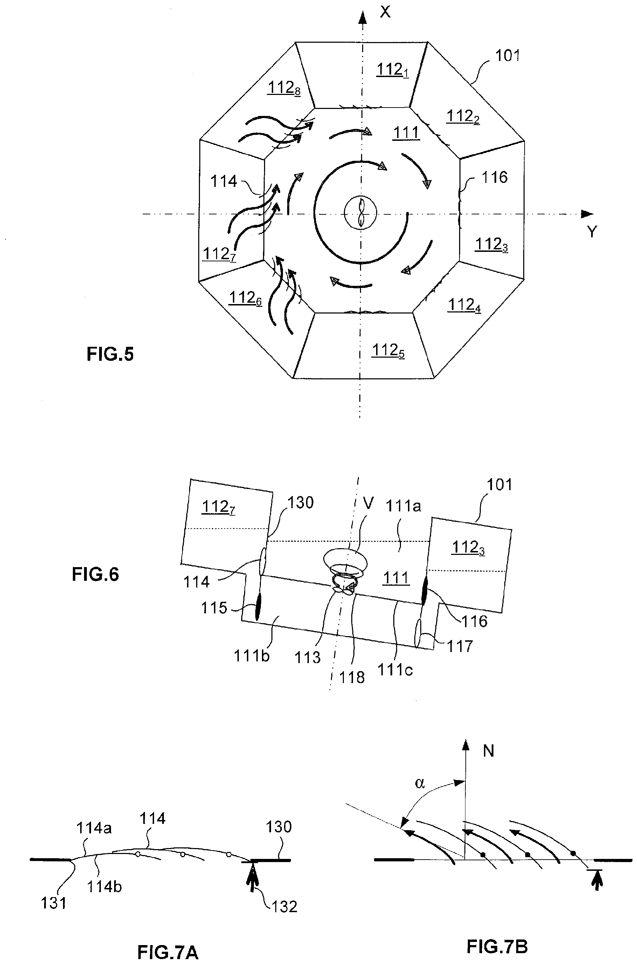

Les figures 5 et 6 illustrent un dispositif selon un deuxième mode de réalisation de l'invention. Le dispositif comprend comme précédemment un récipient 101 comportant un réservoir ou compartiment central 111 d'axe principal A, avec quatre plans de symétrie, et huit réservoirs ou compartiments périphériques 112₁ à 112₈. Les compartiments périphériques sont disposés par couple autour du compartiment central, les deux compartiments de chaque couple étant identiques et disposés symétriquement par rapport à l'axe principal A. Le compartiment central comprend une portion supérieure 111a et une portion inférieure 111b, délimitée par une portion intermédiaire 111c, formée ici d'une paroi intermédiaire horizontale. Le compartiment central comprend une paroi latérale 130 de section transversale octogonale.

Dans sa position initiale stable, l'axe principal A est vertical, les niveaux de fluide dans les compartiments périphériques et le compartiment central sont identiques. La portion supérieure forme une cuve tampon, dont le volume est au moins égale au volume de chaque compartiment périphérique.

Une turbine 13, d'axe de rotation vertical, est disposée dans le compartiment central au niveau d'un orifice d'évacuation central ou conduit central 118, son axe de rotation étant confondu avec l'axe principal A.

Pour chaque couple de compartiments périphériques, les systèmes de vannes montés sur la paroi latérale 130 comprennent, des vannes dites d'injection 114, 116 permettant d'injecter le fluide depuis les compartiments périphériques dans la portion supérieure 111a du compartiment central, de manière à générer et entretenir un vortex V dans ladite portion supérieure, et des vannes dites inférieures 115, 117 permettant le transfert du fluide depuis la portion inférieure 111b du compartiment central vers les compartiments périphériques.

En référence aux figures 7A et 7B, chaque vanne d'injection 114 comprend trois clapets 114a, chaque clapet étant formé d'une lame, de préférence convexe, montée pivotante autour d'un axe vertical 114b au niveau d'un orifice 131 de la paroi latérale, ledit axe étant disposé à distance des deux bords longitudinaux verticaux de la lame. En position fermée, les volets se chevauchent et obturent l'orifice 131. En position ouverte, le flux de fluide passe entre les volets, ces derniers orientant le flux de sorte que le flux soit injecté dans le compartiment central avec une vitesse tangentielle à la paroi latérale du compartiment central, avec un angle α par rapport à la normale N à la paroi latérale d'au moins 45°, de préférence d'au moins 65°. Les clapets assurent ainsi l'ouverture et la fermeture de l'orifice entre le compartiment périphérique et le compartiment central, ainsi que l'orientation du flux de fluide pour générer et entretenir le vortex. La manoeuvre des clapets entre leur deux positions est assurée par des moyens d'actionnement, par exemple de type vérin, illustré de manière schématique sous la référence 132, agissant sur un premier bord longitudinal d'un premier clapet. Lorsque le premier clapet est maintenu en position fermée via lesdits moyens d'actionnement, ce premier clapet maintient le deuxième clapet adjacent en position fermée via son deuxième bord longitudinal venant en appui contre le deuxième clapet entre l'axe de rotation et le deuxième bord longitudinal dudit deuxième clapet. Le deuxième clapet maintient le troisième clapet via son deuxième bord longitudinal en appui contre le troisième clapet entre l'axe de rotation et le deuxième bord longitudinal dudit troisième clapet.

Les vannes inférieures 115, 117 sont formées de simples clapets anti-retour montées au niveau d'une ouverture ou tuyau de la paroi latérale de la portion inférieure.

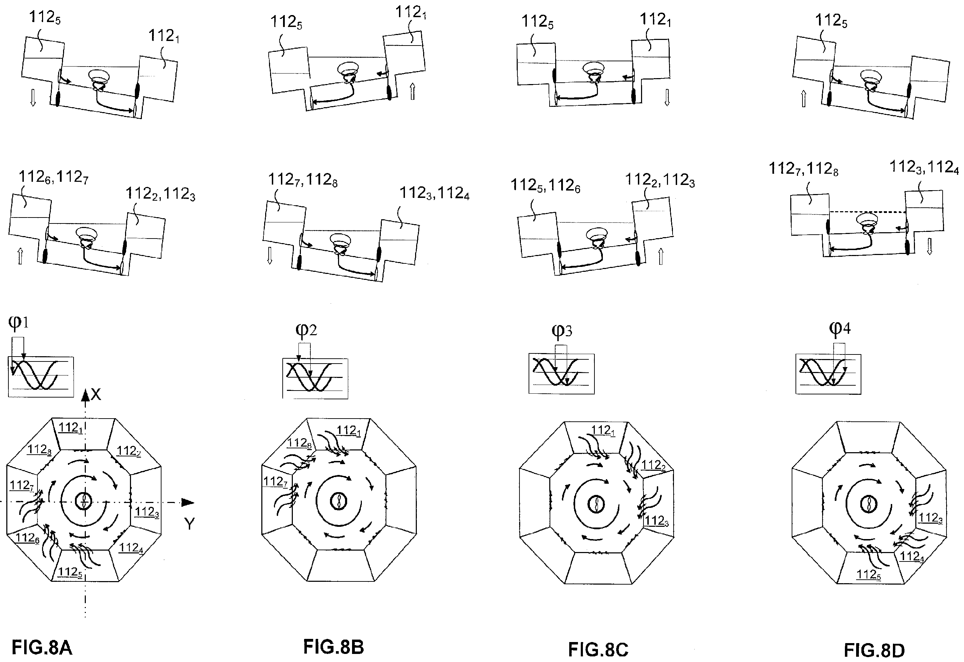

Le fonctionnement du dispositif va à présent être décrit en référence aux figures 8A à 8D qui illustrent différentes phases d'un cycle d'oscillation sinusoïdale de période T, dans le cas d'un cycle correspondant à un mouvement composé d'une rotation autour de l'axe X et d'une rotation autour de l'axe Y, de même amplitude et de même période, mais en décalage de phase de T/4. Dans ce cas, tous les compartiments périphériques sont utilisés pour le transfert de fluide. Pour la description, on considère que le compartiment 112₇ est du côté gauche du récipient, le compartiment 112₃ est du côté droit, le compartiment 112₁ est à l'avant du récipient, et le compartiment 112₅ est à l'arrière du récipient.

La figure 8A illustre la première phase ϕ₁ entre 0 et T/4. Le mouvement du récipient est ascendant sur le côté gauche et descendant de l'arrière : l'inclinaison du dispositif crée une différence de hauteur de fluide entre les compartiments périphériques 112₅, 112₆, 112₇ et le compartiment central : lesdits compartiments périphériques 112₅, 112₆, 112₇ se déversent dans le compartiment central par les clapets injecteurs en position ouverte desdits compartiments périphériques. Le fluide est injecté tangentiellement et initie ou contribue à la rotation du fluide dans le compartiment central dans le sens horaire. L'énergie cinétique du fluide en mouvement entraîne la turbine qui alimente le générateur et produit de l'électricité. La différence de hauteur entre le compartiment central et les compartiments périphériques 112₁, 112₂, 112₃ engendre un mouvement de fluide par l'orifice d'évacuation du compartiment central vers lesdits compartiments périphériques 112₁, 112₂, 112₃ en passant par les clapets anti-retour inférieurs. L'évacuation étant dans la région du centre, un tourbillon ou vortex se crée ou s'entretient, créant ou entretenant le mouvement du fluide du compartiment central.

La figure 8B illustre la deuxième phase ϕ2 entre T/4 et T/2. Le mouvement du récipient est descendant sur le côté gauche et ascendant sur l'avant, la différence de hauteur de fluide diminue entre les compartiments périphériques 112₁, 112₇ et 112₈ et le compartiment central : le débit entre les compartiments périphériques et le compartiment central diminue jusqu'à ce que les hauteurs d'eau s'équilibrent.

En référence à la figure 8C, qui illustre la troisième phase ϕ3 entre T/2 et 3T/4, le mouvement du récipient est montant sur le côté droit et descendant sur l'avant, la différence de hauteur de fluide augmente entre les compartiments périphériques 112₁, 112₂ et 112₃ et le compartiment central : le débit entre ces compartiments périphériques et le compartiment central augmente jusqu'à ce que la différence de hauteurs d'eau soit maximale.

En référence à la figure 8D, qui illustre la quatrième phase 4 ϕ4 entre 3T/4 et T, le mouvement de la structure est descendant sur le côté droit et ascendant sur l'arrière, la différence de hauteur de fluide est positive décroissante entre les compartiments périphériques 112₃, 112₄ et 112₅ et le compartiment central : le débit entre ces compartiments périphériques et le compartiment central diminue jusqu'à ce que les hauteurs d'eau s'équilibrent.

Dans le mode de réalisation illustrée, le fond de la portion supérieure est plan. En variante, ce fond peut être tronconique de révolution ou polygonal de manière à former un convergent en direction de la turbine.

Pour augmenter la quantité d'énergie récupérée, le dispositif est avantageusement dupliqué sur plusieurs niveaux. La quantité d'énergie récupérée est alors proportionnelle au nombre de niveaux dans la limite de l'énergie totale transmise au dispositif.

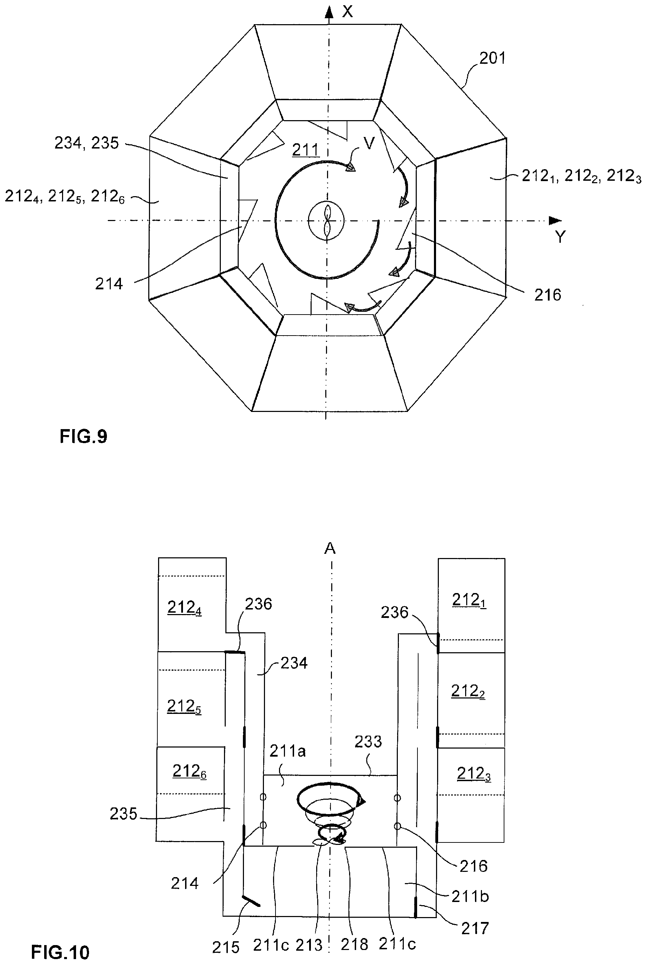

Les figures 9 et 10 illustrent un dispositif selon un troisième mode de réalisation selon l'invention comprenant des couples de compartiments périphériques décalés verticalement sur trois niveaux ou étages. Le dispositif comprend comme précédemment un récipient 201 comportant un réservoir ou compartiment central 211 d'axe principal A, avec quatre plans de symétrie, et trois étages de huit réservoirs ou compartiments périphériques. Sur chaque étage, les compartiments périphériques sont disposés par couple autour du compartiment central, les deux compartiments de chaque couple étant identiques et disposés symétriquement par rapport à l'axe principal A.

Dans le mode de réalisation illustré, les couples de compartiments périphériques, qui appartiennent à des étages différents et qui sont superposés, sont identiques. La figure 10 illustre trois couples superposés de compartiments périphériques : un couple de compartiments périphériques 212₃, 212₆, dits inférieurs, du premier étage, un couple de compartiments périphériques 212₂, 212₅ dits intermédiaires, du deuxième étage, et un couple de compartiments périphériques 212₁, 212₄ dits supérieurs du troisième étage.

Le compartiment central comprend une portion supérieure 211 a et une portion inférieure 211b, délimitée par une portion intermédiaire 211c, formée ici d'une paroi intermédiaire horizontale. Le compartiment central comprend une paroi latérale 230 de section transversale octogonale. Le compartiment central présente une paroi supérieure 233 positionnée, dans la direction verticale, en dessous des compartiments périphériques intermédiaires 212₂, 212₅ du deuxième étage. Les compartiments inférieurs 212₃, 212₆ sont disposés verticalement sensiblement au même niveau que la paroi intermédiaire 211c. La portion supérieure 211a forme une cuve tampon, dont le volume est au moins égale au volume de chaque compartiment périphérique. La paroi intermédiaire présente d'un orifice d'évacuation central ou conduit central 218, au niveau duquel est montée une turbine 213, d'axe de rotation vertical.

En référence à la figure 10, les premiers compartiments 212₁, 212₂, 212₃ superposés sont connectés d'une part à la portion supérieure 211a via un premier conduit commun 234, appelée également première colonne ou boîte à eau, et d'autre part à la portion inférieure 211b du compartiment central via un second conduit 235, appelé également seconde colonne ou boîte à eau. Le premier conduit s'étend verticalement du premier compartiment supérieur jusqu'à la portion supérieure. Le second conduit s'étend verticalement du premier compartiment supérieur jusqu'à la portion inférieure 211b. Chaque premier compartiment périphérique est connecté auxdits premier et second conduits via une vanne de type 3-voies, représentée schématiquement sous la référence 236 : une première voie est connectée audit compartiment périphérique, dans sa partie inférieure, une deuxième voie est connectée au premier conduit 234 et une troisième voie est connectée au second conduit 235. Le premier conduit débouche dans la portion supérieure du compartiment central, au niveau d'une ouverture de la paroi latérale du compartiment central, cette ouverture étant équipée d'un système d'injection 214 permettant de créer et entretenir un vortex dans la portion supérieure, tel que décrit précédemment. Le deuxième conduit est connecté à la portion inférieure par une vanne inférieure 215.

De manière analogue, les seconds compartiments 212₄, 212₅, 212₆ sont connectés via des vannes de type 3-voies à un premier conduit 234 équipé d'un système d'injection 216 et un second conduit 235 équipé d'une vanne inférieure 217. Chaque ensemble de premiers compartiments périphériques superposés et chaque ensemble de seconds compartiments périphériques superposés sont connectés à la portion supérieure et la portion inférieure du compartiment central par un premier conduit et un second conduit.

Dans le mode de réalisation illustré, les premiers conduits sont de section parallélépipédique et leurs parois forment la paroi latérale octogonale de la portion supérieure du compartiment central.

Chaque système d'injection 214, 216 est formé d'un déflecteur monté fixe sur la paroi latérale, au niveau d'une ouverture de la paroi latérale, de manière à créer un mouvement de rotation du fluide dans le sens horaire, tel qu'illustré à la figure 9. Les vannes inférieures 215, 217 sont formées de simples clapets anti-retour montés au niveau d'une ouverture ou tuyau de la paroi latérale de la portion inférieure.

Les vannes de type 3-voies et les vannes inférieures sont pilotées en ouverture et fermeture, en fonction des mouvements d'oscillation du récipient.

Dans ce mode de réalisation, le compartiment central est toujours plein pour permettre le transfert de fluide entre les compartiments périphériques inférieurs, intermédiaires et supérieurs.

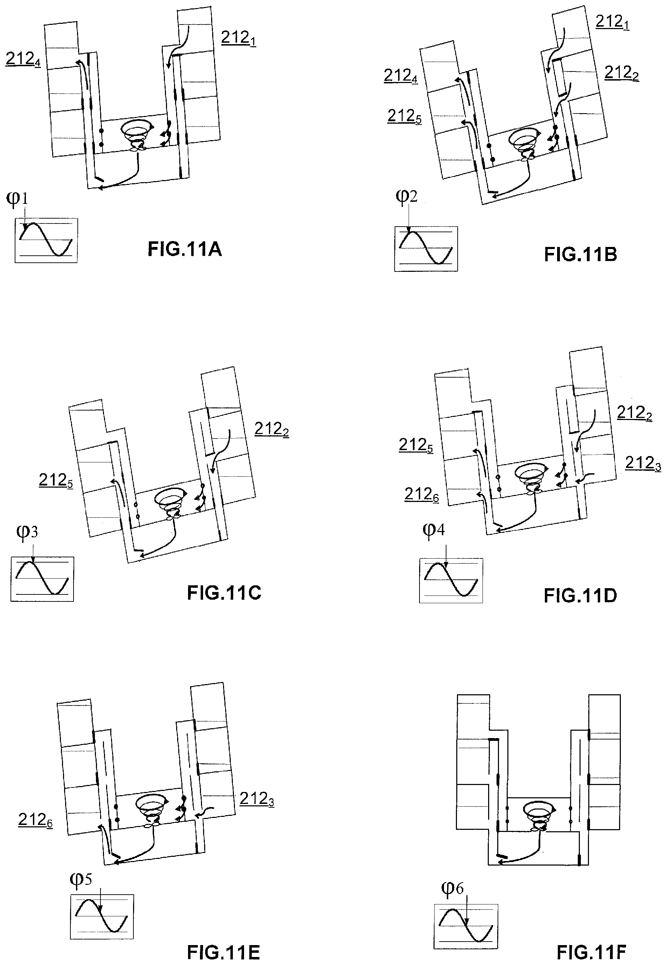

Les figures 11A à 11F illustrent différentes phases d'un cycle d'oscillation sinusoïdale de période T, dans le cas d'un cycle simple correspondant à un mouvement de rotation autour de l'axe X :
- Phase ϕ1 : le mouvement du récipient est ascendant sur le côté droit : vidange du premier compartiment supérieur 212₁ seul vers le deuxième compartiment supérieur 212₄ seul.
- Phase ϕ2 : le mouvement du récipient est ascendant sur le côté droit, vidange des premiers compartiments supérieur et intermédiaire 212₁ et 212₂ vers les seconds compartiments supérieur et intermédiaire 212₄ et 212₅ pour assurer la constance de débit.
- Phase ϕ3 : le mouvement de la structure est au maxi de l'élévation sur le côté droit, vidange du premier compartiment intermédiaire 212₂ seul dans le deuxième compartiment intermédiaire 212₅ seul.
- Phase ϕ4 : le mouvement du récipient est descendant sur le côté droit : vidange des premiers compartiments intermédiaire et inférieur 212₂ et 212₃ dans les seconds compartiments intermédiaire et inférieur 212₅ et 212₆.
- Phase ϕ5 : le mouvement du récipient est descendant sur le côté droit, vidange du premier compartiment inférieur 212₃ seul dans le second compartiment inférieur 212₆ seul.
- Phase ϕ6 : le mouvement va s'inverser et la structure va se lever côté gauche, l'effet vortex dans le compartiment central assure la continuité de la rotation de la turbine, l'énergie emmagasinée dans le vortex perpétuant le mouvement de la turbine pendant que le mouvement de fluide opposé s'installe.

En décomposant ainsi les différentes phases de vidange, la continuité du flux dans le compartiment central est assurée. Dans le cas d'un mouvement moins régulier et alternatif, la régulation par commande forcée de la vidange des compartiments périphériques intermédiaires et supérieurs d'une part et, d'autre part, le remplissage des compartiments périphériques inférieurs indépendamment les uns des autres, on obtient la continuité du flux dans le compartiment central.

Dans une variante de réalisation, les compartiments périphériques sont décalés radialement les uns des autres d'un étage à l'autre, les compartiments inférieurs étant plus écartés de l'axe A que les compartiments supérieurs. Par ailleurs, selon une variante de réalisation, le volume des compartiments périphériques décroit de bas en haut, les compartiments supérieurs ayant un volume moins important que les compartiments inférieurs.

Dans d'autres applications dites terrestres, telles que la production d'énergie à partir de secousses sismiques ou des mouvements d'un véhicule, le récipient est soumis à des excitations aléatoires (fréquence et période indéterminées). Dans ces applications, le dispositif est monté sur un objet en mouvement, par exemple une plate-forme de grandes dimensions pour la production d'énergie à partir de secousses sismiques ou un véhicule en mouvement pour la production d'énergie à partir des mouvements du véhicule. Avantageusement, des moyens de rappel élastique, tels que par exemple des ressorts amortisseurs ou des vérins hydrauliques, sont prévus entre le dispositif et l'objet en mouvement pour faire perdurer ou entretenir les mouvements de l'objet. Le pilotage des vannes sera alors différent mais consistera toujours à maintenir le plus possible un écoulement de fluide à travers la portion intermédiaire du compartiment central.

Le dispositif de récupération d'énergie peut être également placé dans un aéronef ou une station spatiale pour récupérer de l'énergie lorsque cet équipement est en mouvement.

Le dispositif de l'invention présente donc de nombreuses applications, en plus de la production d'énergie à partir de la houle marine, par exemple :
- production d'énergie à partir des mouvements d'un véhicule mobile (voiture, train, bus...) ;
- production d'énergie à partir des secousses sismiques de l'écorce terrestre ;
- production d'électricité à partir d'un jouet ou gadget en mouvement ;
- production d'électricité à partir d'un élément de décoration mis en mouvement régulier ;
- production d'électricité à partir des mouvements de jeux de jardins d'enfants : balançoires, tourniquets, etc...

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de récupération de l'énergie de mouvements, tels que les mouvements de la mer, des secousses sismiques ou les mouvements d'objets mobiles, sous la forme d'énergie électrique, comprenant: - un récipient (1, 101, 201) présentant un axe principal (A) et apte à osciller autour d'au moins un axe perpendiculaire audit axe principal sous l'effet desdits mouvements, ledit récipient comprenant: plus de trois compartiments différents (121 -128 ; 1121 -1128 ; 2121 -2126), ledit récipient contenant un fluide (F) apte à circuler, lorsque ledit récipient oscille, entre lesdits compartiments différents, - au moins une turbine (13, 113, 213) disposée sur le trajet du fluide circulant entre lesdits compartiments différents et couplée à un alternateur pour produire de l'énergie électrique lorsque le fluide circulant entre les compartiments différents entraine ladite turbine, - un compartiment central (11, 111, 211) à travers lequel transite le fluide circulant entre lesdits compartiments différents, ledit compartiment central comprenant une portion supérieure, une portion inférieure et une portion intermédiaire (11c, 111c, 211c), et la turbine étant disposée dans le compartiment intermédiaire et étant apte à être entraînée en rotation par le fluide circulant entre la portion supérieure et la portion inférieure du compartiment central, - des systèmes de vannes (14, 17 ; 114, 117 ; 214, 217, 234, 235, 236) disposés entre les compartiments pour transférer du fluide de l'un au moins des compartiments différents vers la portion supérieure du compartiment central et de la portion inférieure du compartiment central vers un autre des compartiments différents lorsque l'énergie potentielle du fluide dans le premier compartiment cité est supérieure à l'énergie potentielle du fluide dans ledit autre compartiment, **caractérisé en ce que** les plus de trois compartiments différents sont disposés périphériquement tout autour du compartiment central, décalés angulairement les uns des autres par rapport à l'axe principal, lesdits systèmes de vannes étant prévus entre chacun desdits compartiments périphériques et le compartiment central, et **en ce que** la portion intermédiaire (11c, 111c, 211c) du compartiment central présente un canal de section réduite entre la portion supérieure (11a, 111a, 211a) et la portion inférieure (11b, 111b, 211b) dudit compartiment central.

2. Dispositif selon la revendication 1, **caractérisé en ce que** les systèmes de vannes (114 ; 214, 234, 235, 236, 116 ; 216, 234, 235, 236) sont chacun aptes à injecter le fluide dans la portion supérieure (11a, 111a, 211a) du compartiment central (11, 111, 211) de manière à y engendrer un vortex (V) dont le mouvement et la vitesse sont entretenus par les oscillations du dispositif sous l'effet desdits mouvements.

3. Dispositif selon la revendication 2, **caractérisé en ce que** chacun des systèmes de vannes comprend un système d'injection (114, 116 ; 214, 216) apte à injecter le fluide depuis la paroi latérale (130, 230) dans une direction d'injection faisant un angle (α) d'au moins 45° par rapport à la normale (N) à ladite paroi latérale.

4. Dispositif selon la revendication 3, **caractérisé en ce que** ledit système d'injection comprend une vanne d'injection (114, 116) comportant au moins un clapet monté pivotant autour d'un axe vertical (114b) entre une position de fermeture d'un orifice (131) et une position ouverte dans laquelle ledit clapet s'étend dans la portion supérieure et forme un déflecteur pour orienter le flux de fluide dans ladite direction d'injection.

5. Dispositif selon l'une des revendications 1 à 4, **caractérisé en ce que** le récipient (201) comprend des compartiments périphériques superposés (212₁, 212₂, 212₃ ; 212₄, 212₅, 212₆).

6. Dispositif selon l'une des revendications 1 à 5, **caractérisé en ce que** la turbine est disposée pour tourner autour d'un axe parallèle à l'axe principal (A) et qui est vertical, récipient au repos.

7. Embarcation, telle que barge ou plate-forme flottante, apte à flotter sur une masse liquide, notamment sur la mer, animée de mouvements, en particulier la houle marine, **caractérisée en ce qu'**elle est équipée d'un dispositif selon l'une quelconque des revendications 1 à 6, pour générer de l'énergie électrique à partir de l'énergie desdits mouvements.

8. Dispositif terrestre animé de mouvements réguliers ou irréguliers **caractérisé en ce qu'**il est équipé d'un dispositif de récupération d'énergie selon l'une des revendications 1 à 6 pour récupérer l'énergie desdits mouvements du dispositif terrestre sous la forme d'énergie électrique.

9. Dispositif aéronautique, spatial ou sous-marin animé de mouvements réguliers ou irréguliers **caractérisé en ce qu'**il est équipé d'un dispositif de récupération d'énergie selon l'une des revendications 1 à 6 pour récupérer l'énergie desdits mouvements du dispositif sous la forme d'énergie électrique.

## Patentansprüche

1. Vorrichtung zur Rückgewinnung der Energie aus Bewegungen, wie Bewegungen des Meeres, von seimsischen Erdstößen, oder Bewegungen mobiler Gegenstände in Form von elektrischer Energie, umfassend:
- einen Behälter (1, 101, 201), der eine Hauptachse (A) aufweist und imstande ist, um unter der Wirkung der besagten Bewegungen um zumindest eine zur besagten Hauptachse querlaufende Achse zu schwingen, wobei der besagte Behälter umfasst: mehr als drei verschiedene Fächer (121-128; 1121-1128; 2121-2126), wobei der besagte Behälter ein Fluid (F) enthält, das imstande ist, zwischen den besagten verschiedenen Fächern zu zirkulieren, wenn der besagte Behälter schwingt
- zumindest eine Turbine (13, 113, 213), die auf dem Weg des Fluids angeordnet ist, das zwischen den besagten verschiedenen Fächern zirkuliert, und mit einem Wechselstromgenerator verbunden ist, um elektrische Energie zu erzeugen, wenn das Fluid, das durch die verschiedenen Fächer zirkuliert, die besagte Turbine antreibt,
- ein zentrales Fach (11, 111, 211), durch das das Fluid, das zwischen den besagten verschiedenen Fächern zirkuliert, durchfließt, wobei das besagte zentrale Fach einen oberen Abschnitt, einen unteren Abschnitt und einen Zwischenabschnitt (11c, 111c, 211c) umfasst, und die Turbine im Zwischenfach angeordnet ist, und imstande ist, durch das Fluid, das zwischen dem oberen Abschnitt und dem unteren Abschnitt des zentralen Faches zirkuliert, in Drehung versetzt zu werden,
- Ventilsysteme (14, 17; 114, 117; 214, 217, 234, 235, 236), die zwischen den Fächern angeordnet sind, um Fluid von dem zumindest einen der verschiedenen Fächer zum oberen Abschnitt des zentralen Faches, und vom unteren Abschnitt des zentralen Faches in ein anderes der verschiedenen Fächer zu transferieren, wenn die potenzielle Energie des Fluids im genannten ersten Fach größer ist, als die potenzielle Energie des Fluids im besagten anderen Fach, **dadurch gekennzeichnet, dass** die mehr als drei verschiedenen Fächer umlaufend ganz um das zentrale Fach herum angeordnet sind, im Verhältnis zur Hauptachse winkelig zueinander versetzt, wobei die besagten Ventilsysteme zwischen jedem der besagten umlaufenden Fächer und dem zentralen Fach vorgesehen sind, und dadurch, dass der Zwischenabschnitt (11c, 111c, 211c) des zentralen Faches einen Kanal mit einem reduzierten Querschnitt zwischen dem oberen Abschnitt (11a, 111a, 211a) und dem unteren Abschnitt (11b, 111b, 211b) des besagten zentralen Faches aufweist.

2. Vorrichtung nach Anspruch 1, **dadurch gekennzeichnet, dass** die Ventilsysteme (114; 214, 234, 235, 236, 116; 216, 234, 235, 236) jeweils in der Lage sind, das Fluid in den oberen Abschnitt (11a, 111a, 211a) des zentralen Faches (11, 111, 211) zu injizieren, um dort für einen Wirbel (V) zu sorgen, dessen Bewegung und Geschwindigkeit durch die Schwingungen der Vorrichtung unter der Wirkung der besagten Bewegungen gehalten werden.

3. Vorrichtung nach Anspruch 2, **dadurch gekennzeichnet, dass** jedes der Ventilsysteme ein Injektionssystem (114, 116; 214, 216) umfasst, das imstande ist, das Fluid von der seitlichen Wand (130, 230) in eine Injektionsrichtung zu injizieren, die einen Winkel (α) von mindestens 45° im Verhältnis zur Normalen (N) zur besagten seitlichen Wand einschlägt.

4. Vorrichtung nach Anspruch 3, **dadurch gekennzeichnet, dass** das besagte Injektionssystem ein Injektionsventil (114, 116) umfasst, das zumindest eine Klappe umfasst, die um eine vertikale Achse (114b) zwischen einer Schließposition einer Öffnung (131) und einer offenen Position schwenkbar montiert ist, in der sich die besagte Klappe im oberen Abschnitt erstreckt und einen Abweiser bildet, um die Fluidströmung in der besagten injektionsrichtung zu orientieren.

5. Vorrichtung nach einem der Ansprüche 1 bis 4, **dadurch gekennzeichnet, dass** der Behälter (201) überlagerte umlaufende Fächer (212₁, 212₂, 212₃; 212₄, 212₅, 212₆) umfasst.

6. Vorrichtung nach einem der Ansprüche 1 bis 5, **dadurch gekennzeichnet, dass** die Turbine angeordnet ist, um sich um eine parallele Achse zur Hauptachse (A) zu drehen, und die bei ruhendem Behälter vertikal ist.

7. Wasserfahrzeug, wie eine Barge oder schwimmende Plattform, die imstande ist, auf einer flüssigen Masse, vor allem auf dem Meer zu schwimmen, durch Bewegungen, im Speziellen den Wellengang des Meeres angetrieben, **dadurch gekennzeichnet, dass** es mit einer Vorrichtung nach einem der Ansprüche 1 bis 6 ausgerüstet ist, um aus der Energie der besagten Bewegungen elektrische Energie zu erzeugen.

8. Terrestrische Vorrichtung, die durch regelmäßige oder unregelmäßige Bewegungen angetrieben wird, **dadurch gekennzeichnet, dass** sie mit einer Vorrichtung zur Rückgewinnung von Energie nach einem der Ansprüche 1 bis 6 ausgerüstet ist, um die Energie der besagten Bewegungen der terrestrischen Vorrichtung in Form von elektrischer Energie zurückzugewinnen.

9. Luftfahrt-, Raumfahrt- oder Unterwasservorrichtung, die durch regelmäßige oder unregelmäßige Bewegungen angetrieben wird, **dadurch gekennzeichnet, dass** sie mit einer Vorrichtung zur Rückgewinnung von Energie nach einem der Ansprüche 1 bis 6 ausgerüstet ist, um die Energie der besagten Bewegungen der Vorrichtung in Form von elektrischer Energie zurückzugewinnen.

## Claims

1. Device for recovering the energy of movements, such as the movements of the sea, earth tremors or the movements of mobile objects, in the form of electrical energy, comprising:
- a container (1, 101, 201) having a main axis (A) and able to oscillate around at least one axis perpendicular to said main axis under the effect of said movements, said container comprising: more than three different compartments (121-128; 1121-1128; 2121-2126), said container containing a fluid (F) able to flow, when said container oscillates, between said different compartments,
- at least one turbine (13, 113, 213) arranged on the path of the fluid flowing between said different compartments and coupled to an alternator in order to produce electrical energy when the fluid flowing between the different compartments drives said turbine,
- a central compartment (11, 111, 211) through which passes the fluid flowing between said different compartments, said central compartment comprising an upper portion, a lower portion and an intermediate portion (11c, 111c, 211c), and with the turbine being arranged in the intermediate compartment and being able to be driven in rotation by the fluid flowing between the upper portion and the lower portion of the central compartment,
- systems of valve gates (14, 17; 114, 117; 214, 217, 234, 235, 236) arranged between the compartments for transferring fluid from at least one of the different compartments to the upper portion of the central compartment and from the lower portion of the central compartment to another of the different compartments when the potential energy of the fluid in the first compartment mentioned is greater than the potential energy of the fluid in said other compartment, **characterised in that** the more than three different compartments are arranged peripherally all around the central compartment, angularly offset from one another in relation to the main axis, said systems of valve gates being provided between each one of said peripheral compartments and the central compartment, and **in that** the intermediate portion (11c, 111c, 211c) of the central compartment has a channel with a reduced section between the upper portion (11a, 111a, 211a) and the lower portion (11b, 111b, 211b) of said central compartment.

2. Device according to claim 1, **characterised in that** the systems of valve gates (114; 214, 234, 235, 236, 116; 216, 234, 235, 236) are each able to inject the fluid into the upper portion (11a, 111a, 211a) of the central compartment (11, 111, 211) in such a way as to generate therein a vortex (V) of which the movement and the speed are maintained by the oscillations of the device under the effect of said movements.

3. Device according to claim 2, **characterised in that** each one of the systems of valve gates comprises an injection system (114, 116; 214, 216) able to inject the fluid from the lateral wall (130, 230) in an injection direction that creates an angle (α) of at least 45° in relation to the normal (N) to said lateral wall.

4. Device according to claim 3, **characterised in that** said injection system comprises an injection valve (114, 116) comprising at least one valve pivotably mounted about a vertical axis (114b) between a closed position of an orifice (131) and an open position wherein said valve extends in the upper portion and forms a deflector in order to direct the flow of fluid in said direction of injection.

5. Device according to one of claims 1 to 4, **characterised in that** the container (201) comprises superimposed peripheral compartments (212₁, 212₂, 212₃; 212₄, 212₅, 212₆) .

6. Device according to one of claims 1 to 5, **characterised in that** the turbine is arranged to rotate about an axis parallel to the main axis (A) and which is vertical, container at rest.

7. Watercraft, such as a barge or floating platform, able to float on a liquid mass, in particular on the sea, animated with movements, in particular the sea swell, **characterised in that** it is provided with a device according to any of claims 1 to 6, in order to generate electrical energy using the energy of said movements.

8. Land device animated by regular or irregular movements **characterised in that** it is provided with a device for recovering energy according to one of claims 1 to 6 in order to recover the energy of said movements of the land device in the form of electrical energy.

9. Aeronautical, space or undersea device animated by regular or irregular movements **characterised in that** it is provided with a device for recovering energy according to one of claims 1 to 6 in order to recover the energy of said movements of the device in the form of electrical energy.
